Europäisches Patentamt

European Patent Office

Office européen des brevets

(19)

(11) Numéro de publication: **0 146 867**
**B1**

(12)                    **FASCICULE DE BREVET EUROPEEN**

(45) Date de publication du fascicule du brevet:
26.07.89

(51) Int. Cl.⁴: **G 02 B 6/38**

(21) Numéro de dépôt: **84115148.3**

(22) Date de dépôt: **13.12.84**

(54) Attenuateur optique variable pour couplage de fibres optiques.

(30) Priorité: **16.12.83 FR 8320214**

(43) Date de publication de la demande:
**03.07.85 Bulletin 85/27**

(45) Mention de la délivrance du brevet:
**26.07.89 Bulletin 89/30**

(84) Etats contractants désignés:
**CH DE FR GB IT LI NL SE**

(56) Documents cités:
**JP-A-56 078 803**

**ELECTRO-OPTICAL SYSTEMS DESIGN, vol. 18, no. 2, février 1981, pages 33-41, Chicago, Illanois, US; A.N. PAOLANTONIO: "Precision variable fiber-optics attenuator"**
**PATENTS ABSTRACTS OF JAPAN, vol. 6, no. 225 (P-154)[1103], 10 novembre 1982 & JP - A - 57 129 403**
**PATENTS ABSTRACTS OF JAPAN, vol. 5, no. 142 (P-79)[814], 8 septembre 1981 & JP - A - 56 78 803**
**PATENTS ABSTRACTS OF JAPAN, vol. 2, no. 1, 5 janvier 1977, page 9549 E 77 & JP - A - 52 115 230**
**APPLIED OPTICS, vol. 19, no. 14, 15 juillet 1980, pages 2435-2438, New York, US; S. MASUDA: "Variable attenuator for use in single-mode fiber transmission systems"**

(73) Titulaire: **COMPAGNIE LYONNAISE DE TRANSMISSIONS OPTIQUES Société anonyme dite:, 170, Quai de Clichy, F-92111 Clichy (FR)**

(72) Inventeur: **Oguey, Claude, 16, rue Charpentier, F-91240 Saint Michel sur Orge (FR)**
Inventeur: **Jamet, Daniel, 9 Allée des Iris, Hameaux de Villiers F-91620 Nozay (FR)**
Inventeur: **Berreby, Alain, 37, rue Carnot, F-91330 Yerres (FR)**

(74) Mandataire: **Weinmiller, Jürgen et al, Lennéstrasse 9 Postfach 24, D-8133 Feldafing (DE)**

EP 0 146 867 B1

## Description

La présente invention est du domaine des transmissions à haut débit par fibres optiques unimodales. Elle concerne plus particulièrement un atténuateur optique variable permettant des mesures précises du taux d'erreur de tels systèmes de transmission et une mise au point des appareillages rentrant dans ces systèmes. Cet atténuateur optique doit donc être précis, peu encombrant, simple et de coût peu élevé.

L'utilisation de fibres unimodales dans les systèmes de transmission à haut débit incite à utiliser des atténuateurs optiques à fibre unimodale, dans lesquels la fonction d'affaiblissement est obtenue en jouant sur les paramètres de couplage d'une jonction fibre à fibre, qui sont l'angle d'inclinaison entre les extrémités des deux fibres et leur distance ou les deux composantes orthogonales qui définissent cette distance.

Des modifications de ces paramètres effectuées séparément ou de préférence simultanément sur ces paramètres donnent une atténuation variable, de loi de variation connue.

Le document JP-A-56-78 803 décrit un atténuateur optique variable dans lequel un seul des paramètres de couplage entre deux fibres est modifié, en l'occurrence, l'angle entre les axes des fibres.

Dans ce but, les deux fibres sont fixées, alignées axialement et avec leurs faces terminales sensiblement en contact, sur un substrat flexible. Une variation de l'inclinaison axiale des fibres, dans leur zone de couplage est obtenue par une pression exercée sur l'une des extrémités du substrat, son autre extrémité étant maintenue fixe. Pour accentuer la flexibilité du substrat, au niveau de la zone de couplage des fibres, on réduit la section du substrat dans cette zone, en y formant une petite rainure transversale aux fibres. Dans ce cas, une pression est toujours exercée sur l'une des extrémités du substrat, mais celui-ci est maintenu fixe entre l'autre extrémité et sensiblement la zone de section réduite.

Le fait de retenir un seul des paramètres de couplage entre fibres donne, ainsi qu'il est connu, une atténuation variable, de loi exponentielle, qui conduit à un atténuateur de précision restant limitée. Dans la réalisation donnée, l'utilisation d'un substrat flexible portant les fibres, avec une éventuelle rainure pratiquée au niveau de la zone de couplage entre fibres pour accentuer la flexibilité, conduit à une structure dont la reproductibilité ne reste pas constante dans le temps et est donc peu fiable; de plus la rainure, qui améliore la flexibilité, fragilise le substrat.

L'article intitulé «Variable attenuator for use in single-mode fiber transmission systems» publié dans Applied Optics, 15 juillet 1980, vol. 19, n° 14, aux pages 2435 à 2438, porte sur l'obtention d'une atténuation variable à partir d'une combinaison de ces paramètres de couplage d'une jonction fibre à fibre. L'idée de base retenue pour la réalisation d'un atténuateur optique variable consiste alors à rendre mobile sur un arc de cercle l'extrémité de l'une des fibres d'un élément d'affaiblissement qui définit la jonction fibre à fibre de cet atténuateur. Dans la mise en œuvre illustrée, l'élément d'affaiblissement comporte un support à rainure en V concave, s'étendant selon un arc de cercle, qui reçoit les deux extrémités des deux fibres unimodales définissant la jonction. Sur ce support, l'extrémité de l'une des fibres est fixée dans la rainure. L'extrémité de l'autre fibre est, par contre, rendue mobile le long de la rainure. A cet effet, cette autre fibre est solidaire de l'une des extrémités d'un bras monté pivotant, à son autre extrémité, autour du centre du cercle défini par la rainure en V et commandé à partir d'une tête micrométrique de précision donnant l'amplitude de son déplacement.

Dans ce mode de réalisation, les deux fibres sont nécessairement montées dans des rainures en V, pour des raisons de précision, et de reproductibilité des valeurs d'atténuation apportée en fonction de groupes de valeurs prises individuellement par ces paramètres. La plage des valeurs d'atténuation possible ainsi que la précision et la reproductibilité de ces valeurs d'atténuation sont donc limitées du fait même de ce mode de maintien relatif des fibres, et également par les réflexions parasites sur les parois de la rainure, lorsque la distance entre les extrémités des fibres augmente. Par ailleurs, la précision et la reproductibilité des valeurs d'atténuation qui sont liées à la précision de l'usinage de la rainure sont également directement dépendantes des conditions d'utilisation et de manipulation de l'atténuateur qui peuvent conduire à un endommagement de l'extrémité de la fibre mobile dans la rainure et sous l'effet de chocs ou vibrations appliqués ou transmis à l'atténuateur, à la sortie partielle ou totale hors de la rainure de la fibre mobile notamment qui se trouve maintenue contre le fond de la rainure simplement sous l'effet de sa flexion.

La présente invention a pour but de définir une structure d'atténuateur optique variable, basé sur une modification simultanée des paramètres de couplage entre deux fibres mais, qui est simple, et de fabrication industrielle aisée, et évite notamment les inconvénients des structures connues.

Elle a pour objet un atténuateur optique variable comportant des moyens d'affaiblissement réalisant un couplage variable entre des premières extrémités de deux fibres optiques portées par un support par déplacement de la première extrémité de l'une des fibres sur un arc de cercle passant par la première extrémité de l'autre fibre, caractérisé par le fait que lesdites fibres sont toutes deux montées fixes sur ledit support en ayant leurs premières extrémités couplées optiquement l'une à l'autre et que ledit support est de forme parallélépipédique, reçoit sur l'une de ses grandes faces, dite face de maintien, lesdites fibres et présente, d'une part, une fente, parallèle à ses grandes faces, qui s'étend sur une partie de sa longueur en y définissant une première branche à laquelle appartient ladite face de maintien et une seconde branche à laquelle appartient la grande face opposée, et, d'autre part, un trou cylindrique, de diamètre nettement supérieur à celui des fibres, pratiqué transversalement dans ladite première branche, sensiblement au niveau du fond de ladite fente, et ouvert sur ladite face de maintien en regard de la zone de couplage optique entre lesdites fibres, et par le fait qu'il comporte en outre des moyens d'actionnement en rotation de ladite première branche déplaçable en rotation par déformation élastique dudit trou cylindrique, agissant sensiblement au niveau de l'extrémité libre de cette première branche.

Dans un mode particulier de réalisation, les moyens de commande comportent une tige filetée dont une extrémité est retenue, tout en étant libre en rotation, dans l'extrémité libre de ladite première branche et une réglette non déformable d'une part traversée par ladite tige et d'autre part rendue solidaire dudit support, uniquement sur la partie de sa longueur non divisée par ladite fente.

D'autres caractéristiques et avantages de la présente invention apparaîtront au cours de la description d'exemples de réalisation donnée en regard du dessin ci-annexé. Dans ce dessin:

— les figures 1 et 2 illustrent en perspective un atténuateur optique variable selon la présente invention, pour des conditions différentes de couplage de ses fibres,

— la figure 3 représente en coupe l'élément de commande de l'atténuateur optique selon les figures 1 et 2,

— les figures 4 et 5 illustrent en perspective une variante de réalisation de l'atténuateur optique des figures 1 et 2, donnée sensiblement pour les mêmes conditions précédentes de couplage de ses fibres,

— la figure 6 représente en coupe l'élément de commande de l'atténuateur optique des figures 4 et 5,

— la figure 7 représente un mode d'utilisation des atténuateurs optiques précédents.

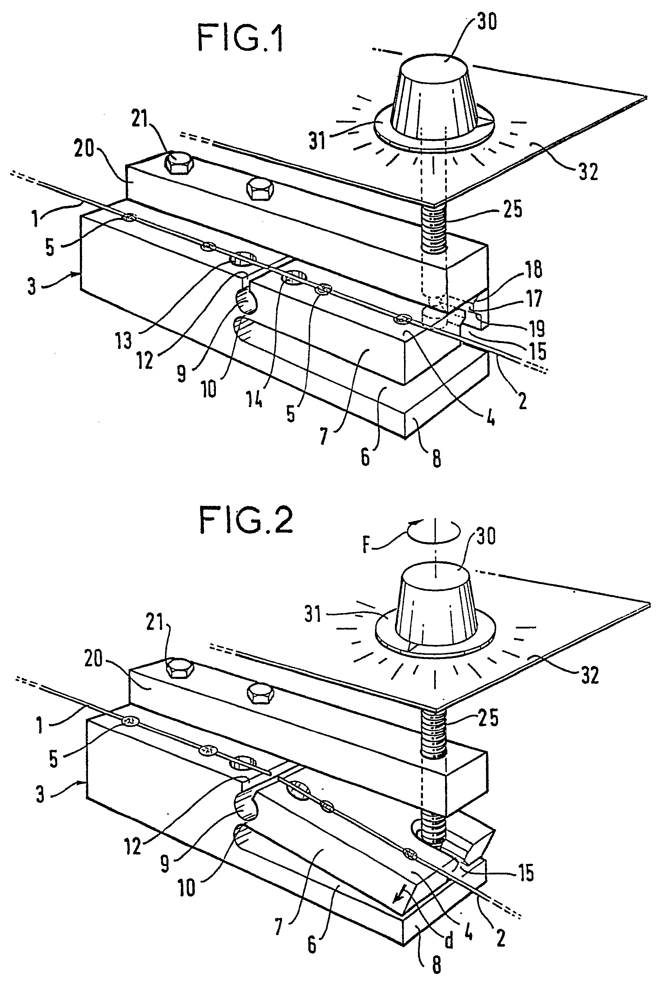

Dans les figures 1 et 2 on a illustré un mode de réalisation de l'atténuateur optique selon l'invention, ou plus précisément l'élément d'affaiblissement que comporte cet atténuateur et qui assure un couplage variable entre des premières extrémités de deux fibres unimodales 1 et 2. Cet élément d'affaiblissement est du type à fonction d'affaiblissement rendue variable par déplacement de la première extrémité de l'une des fibres sur un arc de cercle sur lequel la première extrémité de l'autre fibre est fixe. Dans l'atténuateur optique les deux fibres 1 et 2 auront leurs secondes extrémités respectives couplées à des fibres de ligne extérieures non représentées.

L'élément d'affaiblissement de l'atténuateur variable comporte un support 3 pour les deux fibres 1 et 2. Ce support 3 est de forme parallélépipédique; les deux fibres 1 et 2 sont alignées l'une avec l'autre sur l'une des grandes faces planes du support, dite face de maintien des fibres 4 et fixées sur cette grande face du support par des points de collage tels que 5 après réglage précis du positionnement relatif de leurs premières extrémités respectives de couplage, effectué à l'aide d'un appareil binoculaire et d'un manipulateur de précision à pinces.

Le support 3 des fibres présente une fente 6 parallèle à ses grandes faces et s'étendant sur une première partie de sa longueur, sensiblement ici une première moitié. La fente 6 divise cette première partie du support en deux branches 7 et 8. Il comporte, en outre, un trou cylindrique 9, formé dans la branche 7 à laquelle appartient la face de maintien 4 des fibres, sensiblement au niveau du fond de la fente 6, en étant parallèle au fond de cette fente. Le trou cylindrique 9 traverse le support 3 de part en part. Ce trou 9 reste séparé de la fente 6 par une fine cloison qu'il maintient sur sa longueur en regard d'elle dans la branche 7 et dont la partie de moindre épaisseur référencée 10 est appelée ci-après charnière. Il est, par contre, sensiblement à l'opposé de la charnière 10, ouvert sur sa longueur sur la face 4 de maintien des fibres à travers une étroite fenêtre d'ouverture 12 transversale à la face 4.

Les premières extrémités de couplage des deux fibres 1 et 2, sont exemptes de points de collage, elles sont positionnées juste au-dessus de cette fenêtre 12.

Le support 3 comporte, en outre, deux trous borgnes 13 et 14, pratiqués à travers la face de maintien 4 des fibres, de part et d'autre de la fenêtre 12 et sur les trajectoires de positionnement des fibres. Ces trous, larges par rapport au diamètre des fibres qui s'étendent à leur surface, contribuent à faciliter le réglage des positions relatives des premières extrémités des fibres, en permettant un débattement tout azimut des extrémités des pinces de préhension des fibres du manipulateur de précision précité.

Le support 3 sera de préférence choisi en un matériau à base de laiton aisé à usiner et présentant un module d'élasticité de l'ordre de 50 da N/mm$^2$; il sera avantageusement en matériau connu sous le nom «Ni-cladec 3444» commercialisé par «Le Comptoir Lyon Alemand Louyot».

L'élément d'affaiblissement comporte, en outre, une réglette rigide 20 et une tige de commande 25 associées l'une à l'autre et au support 3, pour la commande de l'élément d'affaiblissement résultant.

La réglette rigide 20 est une réglette pleine, non déformable. Elle est appliquée sur la face de maintien 4 des fibres et est rendue solidaire du support 3 par des vis 21 uniquement sur la seconde moitié de ce support 3, c'est-à-dire sur la partie du support non divisée par la fente 6, la branche 7 et la réglette 20 étant donc non directement fixées l'une à l'autre. Cette réglette 20 s'étend sur la totalité de la longueur de la face 4 mais n'occupe simplement sur cette face que sensiblement la moitié de la largeur de cette face, l'autre moitié étant destinée au maintien des deux fibres. Cette réglette 20 présente, dans sa partie non fixée au support 3 et au voisinage de son extrémité, un trou taraudé à pas fin, non référencé, de réception de la tige de commande 25 qui est filetée en correspondance.

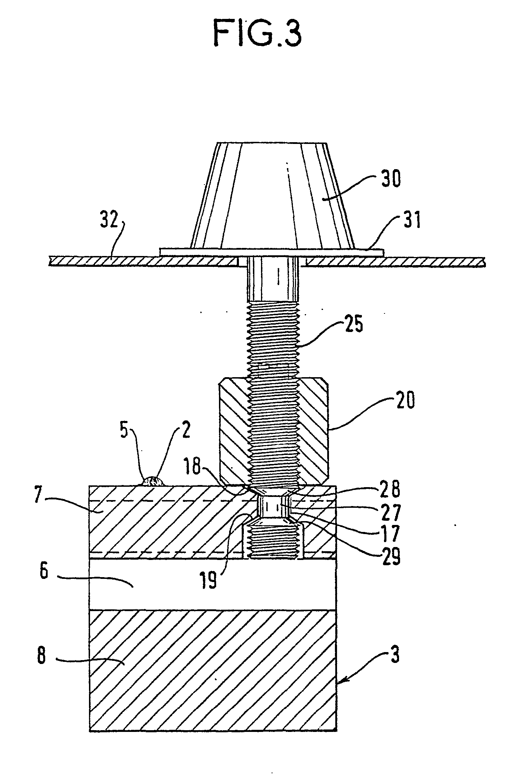

En regard des figures 1 et 2 et plus particulièrement de la figure 3, on voit que cette tige filetée 25, vissée dans la réglette qu'elle traverse, a son extrémité maintenue prisonnière, tout en demeurant libre en rotation, dans l'extrémité de la branche 7 définie dans le support 3.

L'extrémité de cette tige engagée dans la branche 7 présente, à cet effet, une gorge 27 et deux épaulements coniques 29 et 28 de liaison de la gorge avec la partie terminale filetée et l'autre partie filetée adjacente, lui donnant une forme de diabolo. L'extrémité de la branche 7 présente, en correspondance, une ouverture 15 formée dans son épaisseur pour le logement de l'extrémité de la tige 25. Cette ouverture débouche en bout de la branche 7, pour l'insertion de la tige. Elle est profilée pour assurer la retenue de l'extrémité en forme de diabolo de la tige dans la branche tout en permettant sa libre rotation, par une nervure 17 à bords inclinés 18 et 19, que présentent les bords limitant son contour dans l'épaisseur de la branche. Cette nervure 17 est reçue dans la gorge 27, les bords inclinés 18 et 19 de cette nervure s'appliquent contre les épaulements coniques 28 et 29 de la tige 25.

L'extrémité opposée de la tige 25 porte un bouton de manœuvre 30 avec collerette d'indexage 31 mobile sur une plaque 32 graduée sur la périphérie de la collerette.

Ainsi qu'il ressort des figures 1 et 2, le couplage entre les fibres est rendu variable par simple actionnement en rotation du bouton de manœuvre 30, selon la flèche F de la figure 2 à partir de la position initiale donnée dans la figure 1. Cette rotation provoque l'avance, à travers la réglette 20, de la tige 25 qui vient pousser sur l'extrémité libre de la branche 7, ce qui entraîne la rotation, selon la flèche d de la figure 2, de la branche 7 autour de la charnière 10 par déformation élastique du trou cylindrique 9. La première extrémité de la fibre 2, portée par cette branche 7, se déplace ainsi sur un arc de cercle centré sur la charnière 10 devant la première extrémité de l'autre fibre 1.

Outre son mode de réalisation très aisé et son mode d'actionnement très simple, cet atténuateur présente de nombreux avantages supplémentaires, en particulier, de précision et de reproductibilité. Ces derniers avantages, inhérents à sa structure, sont dus notamment:

– à la fixation des fibres, à l'exception de leurs premières extrémités, sur leur support et donc à l'absence de tout déplacement de l'une ou l'autre des fibres sur leur support,

– au positionnement de ces premières extrémités dans une zone de jonction ou de couplage exempte de surfaces métalliques au niveau de leur face de couplage, qui peuvent conduire à des réflexions parasites,

– à la possibilité d'un réglage initial en dynamique du positionnement relatif des premières extrémités des fibres conduisant à une compensation d'éventuels défauts entre fibres et à une perte de couplage propre à l'atténuateur demeurant toujours minimale, et à la possibilité d'un étalonnage initial de ses variations d'affaiblissement,

– à la faible amplitude possible du déplacement de l'extrémité de la branche 7 à partir de l'actionnement du bouton et à l'effet de réduction important introduit par cette branche sur le déplacement de la première extrémité de la fibre qu'elle porte.

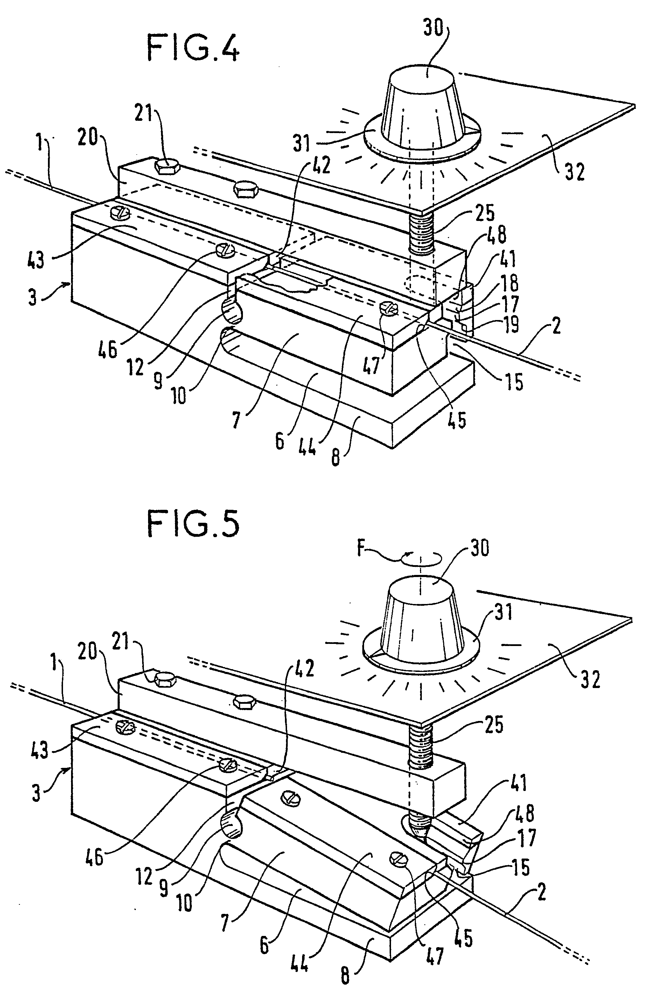

Dans les figures 4, 5 et 6 on a représenté une variante de réalisation de l'atténuateur optique précédent. Dans cette variante, les éléments identiques à ceux des figures 1 à 3 sont désignés sous les mêmes références et ne sont pas décrits à nouveau ci-après.

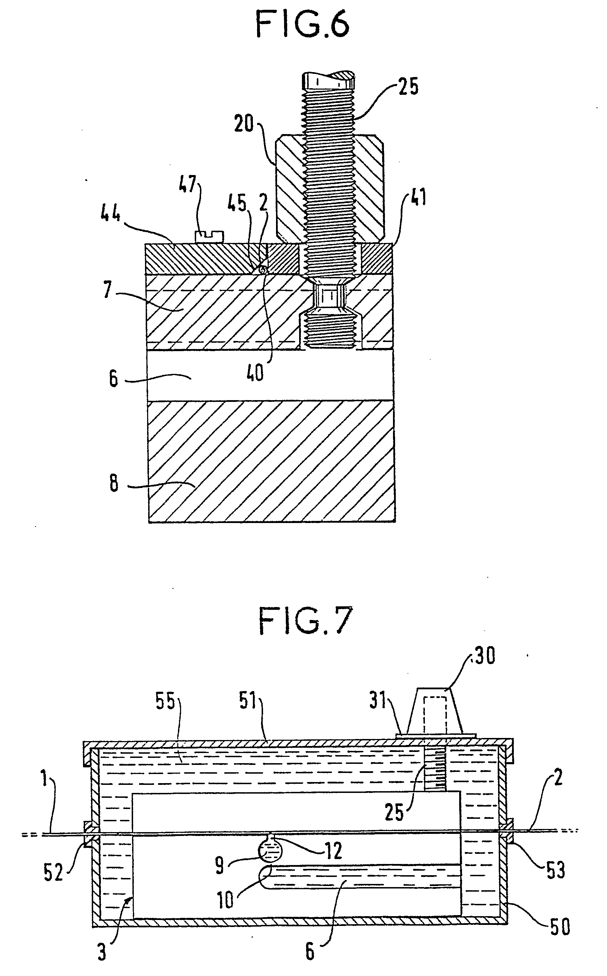

Les différences entre ces modes de réalisation portent essentiellement sur le mode de positionnement des fibres 1 et 2. Dans cette variante de réalisation, les fibres 1 et 2 sont positionnées au fond d'une rainure en V 40 visible plus particulièrement dans la figure 6, qui est définie entre la face 4 du support 3 et la face latérale d'une barrette de positionnement 41, plus étroite que le support 3, qui vient partiellement recouvrir la face 4 du support et est fixée au support. Le couplage entre ces deux fibres est également situé au niveau de la fenêtre d'ouverture 12 dans le support et d'une fente 42, de préférence issue d'usinage avec la fenêtre 12 avec laquelle elle est alignée, qui divise la barrette 41 en deux parties dépendantes l'une de la branche 7 et l'autre de la partie du support non divisée par la fente 6. Les fibres 1 et 2 sont maintenues appliquées au fond de leur rainure en V par deux plaquettes de maintien 43 et 44 ayant chacune à cet effet un bord chanfreiné 45. Ces plaquettes sont sensiblement de même épaisseur que la barrette de positionnement. Elles sont accolées à la barrette 41 et s'étendent sur la face 4 du support 3 de part et d'autre de la fenêtre 12. Elles sont fixées par vis 46 et 47 au support 3.

Dans le montage final, la barrette de positionnement 41 solidaire du support 3 et divisée en deux parties se trouve donc simplement interposée entre le support 3 et la réglette 20. Elle déborde sous la réglette pour l'accessibilité de la rainure en V qu'elle définit avec le support. Son extrémité, du côté de l'extrémité de la branche 7 recevant l'extrémité en diabolo de la tige 25, présente une large échancrure 48 pour le libre passage de cette tige.

Le fonctionnement de l'atténuateur selon cette variante ressort des figures 4 et 5 données comparativement aux figures 1 et 2. Il est identique à celui de la première réalisation décrite.

Dans la figure 7, on a illustré l'atténuateur optique selon l'invention monté en boîtier 50 fermé par un couvercle 51. Les fibres 1 et 2 traversent les parois latérales opposées de ce boîtier à travers des joints 52, 53, étanches. La tige 25 traverse le couvercle 51 à travers un autre joint étanche non représenté, le bouton de manœuvre 30 étant juste au-dessus de ce couvercle. Ainsi qu'illustré, le boîtier fermé 50, 51 est de préférence rempli d'un liquide 55, tel que celui connu sous le nom Opanol ou Eucalyptol, d'indice de réfraction approximativement égal à celui du cœur des fibres, venant

constituer une interface de jonction entre les deux fibres 1 et 2 pour améliorer leur couplage.

La présente invention a été décrite en regard des modes de réalisation illustrés. Il est évident que sans sortir du cadre de cette invention, on pourra y apporter des modifications de détail et/ou remplacer certains moyens par d'autres moyens techniquement équivalents. En particulier, on notera que le trou cylindrique 9, qui débouchait sur la face 4 du support à travers la fente 12 peut directement déboucher sur cette face 4. On notera encore qu'il n'est pas nécessaire que la fente 6 s'étende sur sensiblement la moitié de la longueur du support 3; elle pourra, notamment, s'étendre sur une plus grande longueur pour procurer un effet de réduction encore plus important entre le déplacement de l'extrémité libre de la branche 7 et le déplacement de la première extrémité de la fibre que porte cette branche.

**Revendications**

1. Atténuateur optique variable comportant des moyens d'affaiblissement réalisant un couplage variable entre des premières extrémités de deux fibres optiques portées par un support par déplacement de la première extrémité de l'une des fibres sur un arc de cercle passant par la première extrémité de l'autre fibre, caractérisé par le fait que lesdites fibres (1, 2) sont toutes deux montées fixes sur ledit support (3) en ayant leurs premières extrémités couplées optiquement l'une à l'autre et que ledit support (3) est de forme parallélépipédique, reçoit sur l'une de ses grandes faces, dite face de maintien (4), lesdites fibres et présente, d'une part, une fente (6), parallèle à ses grandes faces, qui s'étend sur une partie de sa longueur en y définissant une première branche (7) à laquelle appartient ladite face de maintien (4) et une seconde branche (8) à laquelle appartient la grande face opposée, et, d'autre part, un trou cylindrique (9), de diamètre nettement supérieur à celui des fibres, pratiqué transversalement dans ladite première branche (7), sensiblement au niveau du fond de ladite fente (6), et ouvert sur ladite face de maintien (4) en regard de la zone de couplage optique entre lesdites fibres, et par le fait qu'il comporte en outre des moyens d'actionnement en rotation (20, 25) de ladite première branche (7) déplaçable en rotation par déformation élastique dudit trou cylindrique (9), agissant sensiblement au niveau de l'extrémité libre de cette première branche (7).

2. Atténuateur optique variable selon la revendication 1, caractérisé par le fait que ledit trou cylindrique (9) est séparé de ladite fente par une cloison dont la partie de moindre épaisseur constitue une charnière (10) autour de laquelle tourne ladite première branche (7) sous l'action desdits moyens d'actionnement (20, 25).

3. Atténuateur optique variable selon la revendication 2, caractérisé par le fait que ledit trou cylindrique (9) est ouvert sur ladite face de maintien (4), à travers une fenêtre transversale (12) sensiblement à l'opposé de la charnière (10).

4. Atténuateur optique variable selon l'une des revendications 1 à 3, caractérisé par le fait que lesdits moyens d'actionnement comportent une tige filetée de commande (25) dont une première extrémité est montée prisonnière dans ladite extrémité libre de ladite première branche (7) tout en y étant libre en rotation, et une réglette (20), non déformable, dans laquelle est vissée ladite tige filetée, montée du côté de ladite face de maintien dudit support (3) auquel elle est solidarisée sur la partie de la longueur de celui-ci non divisée par ladite fente (6).

5. Atténuateur optique variable selon la revendication 4, caractérisé par le fait que ladite première extrémité de ladite tige filetée présente une gorge (27) et deux épaulements (29 et 28) de liaison de ladite gorge à la partie terminale de la tige et à la partie filetée adjacente respectivement, lui conférant une forme de diabolo, et que l'extrémité libre de ladite première branche présente une ouverture (15) dans laquelle est en saillie une nervure périphérique (17) sur laquelle est engagée ladite première extrémité de ladite tige (25).

6. Atténuateur optique variable selon l'une des revendications 1 à 5, caractérisé par le fait que lesdites fibres sont fixées par collage (5) sur ladite face de maintien (4).

7. Atténuateur optique variable selon l'une des revendications 1 à 6, caractérisé par le fait que ledit support (3) présente en outre des trous borgnes (13, 14) de diamètre supérieur à celui desdites fibres, formés dans ladite face de maintien (4) sous lesdites fibres, de part et d'autre et à proximité de leur zone de couplage.

8. Atténuateur optique variable selon l'une des revendications 1 à 5, caractérisé par le fait que lesdites fibres sont positionnées dans une rainure en V (40) définie entre ladite face de maintien (4) du support et une face latérale d'une barrette de positionnement (41) montée sur ladite face de maintien (4) du support, qu'elle recouvre partiellement en largeur, et divisée en deux parties s'étendant de part et d'autre de ladite zone de couplage des fibres et solidaires l'une de ladite première branche (7) et l'autre de la partie du support non divisée par ladite fente (6).

9. Atténuateur optique variable selon la revendication 8, caractérisé par le fait qu'ils comportent deux plaquettes (43, 44) de maintien desdites fibres dans ladite rainure, montées sensiblement accolées à ladite réglette de positionnement (41) sur ladite surface de maintien (4) et fixées respectivement à ladite première branche (7) et à la partie du support non divisée par ladite fente (6), présentant chacune un bord chanfreiné (45) appliquant la fibre correspondante au fond de ladite rainure (40).

10. Atténuateur optique variable selon l'une des revendications 1 à 9, caractérisé par le fait qu'il est monté dans un boîtier fermé de manière étanche (50, 51) rempli d'un liquide (55) d'indice de réfraction sensiblement égal à celui du cœur desdites fibres (1, 2).

## Claims

1. A variable optical attenuator comprising attenuating means which implement a variable coupling between first ends of two optical fibres carried on a support by moving the first end of one of the fibres along a circular arc passing through the first end of the other fibre, characterized in that said fibres (1, 2) are both fixed on said support (3) in having their first ends optically coupled with each other, and that said support (3) has a parallelepipedic shape, accomodates said fibres on one of its great faces, called fixing surface (4), and presents, firstly, a slit (6) parallel to its great faces, which extends over a portion of its length in defining there a first leg (7), to which belongs said fixing surface (4), and a second leg (8) to which belongs the opposing great face, and secondly, a cylindrical hole (9) of a diameter considerably greater than the one of the fibres, disposed within said leg (7) in the transverse sense substantially at the level of the bottom of said slit (6) and open toward the fixing surface (4) and facing the optical coupling zone between said fibres, and that the attenuator further comprises actuation means (20, 25) adapted to rotate said first movable leg (7) in elastically deforming said cylindrical hole (9) while acting substantially on the free end of said first leg (7).

2. A variable optical attenuator according to claim 1, characterized in that said cylindrical hole (9) is separated from said slit by a partition whose thinnest part constitutes a hinge (10) about which rotates said first leg (7) when being actuated by said actuation means (20, 25).

3. A variable optical attenuator according to claim 2, characterized in that said cylindrical hole (9) is open at said fixing surface (4) via a transverse window (12) located substantially opposite said hinge (10).

4. A variable optical attenuator according to any one of claims 1 to 3, characterized in that said actuation means include a threaded control shaft (25) one end of which is captively retained in said free end of said first leg (7) whilst being free to rotate therein, and a rigid rule (20) into which is screwed said threaded shaft, the rule being mounted on the fixing surface of said support (3), and attached thereto at that length portion thereof, which is not divided by said slit (6).

5. A variable optical attenuator according to claim 4, characterized in that said first end of the threaded control shaft has a groove (27) and two shoulders (29 and 28) for linking said groove to the end portion of the shaft or to the adjacent threaded portion respectively, conferring a diabolo shape to said first end, and that the free end of the first leg has an opening (15), wherefrom projects a peripheral rib (17), onto which said first end of the shaft (25) is engaged.

6. A variable optical attenuator according to one of claims 1 to 5, characterized in that said fibres are secured to the fixing surface (4) by adhesive bonding (5).

7. A variable optical attenuator according to one of claims 1 to 6, characterized in that said support (3) is further provided with two blind holes (13, 14) in the fixing surface (4), having a larger diameter than the fibres and being arranged at either side of and near to the coupling zone.

8. A variable optical attenuator according to any one of claims 1 to 5, characterized in that said fibres are positioned in a V-formed groove (40) defined between said fixing surface (4) of the support and a lateral face of a positioning bar (41) mounted on said fixing surface (4) of the support, thereby partially covering this surface in width, and divided into two parts extending on either side of the fibre coupling zone and being fixed one to said first leg (7), the other to the part of the support which is not divided by said slit (6).

9. A variable optical attenuator according to claim 8, characterized in that it further comprises two holding plates (43, 44) for keeping the fibres in said groove, these plates being mounted such as to substantially bear against said positioning bar (41) on said fixing surface (4), while being fixed respectively to said first leg (7) and to the part of the support which is not divided by said slit (6), and the plates each have a chamfered edge (45) adapted to keep the corresponding fibre at the bottom of said groove (40).

10. A variable optical attenuator according to any one of claims 1 to 9, characterized in that it is mounted in a closed and tightly sealed housing (50, 51) filled with a liquid (55) having a refractive index substantially equal to that of the cores of the fibres (1, 2).

## Patentansprüche

1. Veränderlicher optischer Dämpfer, mit Dämpfungsmitteln, die eine veränderliche Kopplung zwischen ersten Enden zweier von einer Unterlage getragener optischer Fasern durch Verschiebung des ersten Endes der einen der Fasern entlang eines Kreisbogens bewirken, der durch das erste Ende der anderen Faser verläuft, dadurch gekennzeichnet, daß beide Fasern (1, 2) auf der Unterlage (3) fest montiert sind, indem ihre ersten Enden optisch aneinander gekoppelt sind, und daß die Unterlage (3) parallelepipedische Form besitzt, auf einer ihrer großen Seiten, Halterungsfläche (4) genannt, die Fasern aufnimmt und einerseits einen Schlitz (6) aufweist, der parallel zu ihren großen Seiten verläuft und sich über einen Teil ihrer Länge erstreckt und dabei er einen ersten Schenkel (7), dem die Halterungsfläche (4) angehört, sowie einen zweiten Schenkel (8) definiert, dem die entgegengesetzte große Seite angehört, und andererseits ein zylindrisches Loch (9) aufweist, dessen Durchmesser erheblich größer als der der Fasern ist, das quer durch den ersten Schenkel (7) im wesentlichen in Höhe des Grundes des Schlitzes (6) verläuft, und das zur Halterungsfläche (4) hin, gegenüber der optischen Kopplungszone der Fasern, offen ist, und daß der Dämpfer weiter Betätigungsmittel (20, 25) zur Drehung des ersten Schenkels (7) durch elastische Verformung des zylindrischen Loches (9) aufweist, die im wesentlichen in Höhe des freien Endes des ersten Schenkels (7) angreifen.

2. Veränderlicher optischer Dämpfer nach Anspruch 1, dadurch gekennzeichnet, daß das zylindrische Loch (9) vom Schlitz durch eine Zwischenwand getrennt ist, deren dünnstwandiger Teil ein Scharnier (10) bildet, um welches der erste Schenkel (7) unter der Einwirkung der Betätigungsmittel (20, 25) dreht.

3. Veränderlicher optischer Dämpfer nach Anspruch 2, dadurch gekennzeichnet, dass das zylindrische Loch (9) zur Halterungsseite (4) hin aufgrund eines Querfenster (12) offen ist, das im wesentlichen dem Scharnier (10) gegenüber liegt.

4. Veränderlicher optischer Dämpfer nach einem der Ansprüche 1 bis 3, dadurch gekennzeichnet, daß die Betätigungsmittel einen Steuergewindeschaft (25), dessen eines Ende im freien Ende des ersten Schenkels (7) drehbeweglich gefaßt ist, sowie ein nicht verformbares Lineal (20) aufweisen, in welches der Gewindeschaft eingeschraubt ist, wobei das Lineal auf der Seite der Halterungsfläche der Unterlage (3) montiert ist, an die das Lineal entlang desjenigen Teils ihrer Länge befestigt ist, der nicht durch den Schlitz (6) getrennt ist.

5. Veränderlicher optischer Dämpfer nach Anspruch 4, dadurch gekennzeichnet, daß das erste Ende des Gewindeschaftes eine Kehle (27) und zwei Schultern (29 und 28) als Übergang der Kehle zum Endabschnitt des Schaftes bzw. dem benachbarten Gewindeabschnitt aufweist, so daß sich eine Gestalt eines Jojos ergibt, und daß das freie Ende des ersten Schenkels eine Öffnung (15) besitzt, an der eine periphere Rippe (17) vorspringt, mit der das erste Ende des Schaftes (25) in Eingriff steht.

6. Veränderlicher optischer Dämpfer nach einem der Ansprüche 1 bis 5, dadurch gekennzeichnet, daß die Fasern durch Kleben auf der Halterungsfläche (4) befestigt sind.

7. Veränderlicher optischer Dämpfer nach einem der Ansprüche 1 bis 6, dadurch gekennzeichnet, daß die Unterlage (3) weiter Sacklöcher (13, 14) aufweist, deren Durchmesser größer als der der Fasern ist und die in der Halterungsfläche (4) unter den Fasern zu beiden Seiten und in der Nähe der Kopplungszone angebracht sind.

8. Veränderlicher optischer Dämpfer nach einem der Ansprüche 1 bis 5, dadurch gekennzeichnet, daß die Fasern in einer V-förmigen Nut (40) plaziert sind, die zwischen der Halterungsfläche (4) des Unterlages und einer Seitenfläche einer Positionierungsleiste (41) ausgebildet ist, welche auf der Halterungsfläche (4) der Unterlage befestigt ist, die sie der Breite nach teilweise bedeckt, wobei die Leiste in zwei Teile getrennt ist, welche sich zu beiden Seiten der Faserkopplungszone erstrecken und von denen die eine mit dem ersten Schenkel (7) und die andere mit dem nicht durch den Schlitz (6) getrennten Teil verbunden ist.

9. Veränderlicher optischer Dämpfer nach Anspruch 8, dadurch gekennzeichnet, daß er zwei Halterungsplatinen (43, 44) für die Fasern in der Nut aufweist, die auf der Halterungsfläche (4) im wesentlichen an die Positionierungsleiste (41) anschließen und auf dem ersten Schenkel (7) bzw. dem nicht durch den Schlitz (6) getrennten Teil der Unterlage befestigt sind, wobei jede Platine eine abgeschrägte Kante (45) besitzt, welche die entsprechende Faser gegen den Boden der Nut (40) drückt.

10. Veränderlicher optischer Dämpfer nach einem der Ansprüche 1 bis 9, dadurch gekennzeichnet, daß er in ein dicht geschlossenes Gehäuse (50, 51) eingebaut ist, welches mit einer Flüssigkeit (55) mit einem Brechungsindex gefüllt ist, der im wesentlichen mit demjenigen des Kerns der Fasern (1, 2) übereinstimmt.

# FIG.1

# FIG.2

EP 0 146 867 B1

# FIG.3

11

# FIG.4

# FIG.5

# FIG.6

# FIG.7